Europäisches Patentamt

European Patent Office

Office européen des brevets

(19)

(11) Veröffentlichungsnummer : **0 160 161**
**B1**

(12) **EUROPÄISCHE PATENTSCHRIFT**

(45) Veröffentlichungstag der Patentschrift :
21.10.87

(21) Anmeldenummer : 85100088.5

(22) Anmeldetag : 05.01.85

(51) Int. Cl.⁴ : **F 28 D   7/10, F 22 B 25/00,**
**F 22 B   1/18, B 01 D   1/10**

(54) **Wärmetauscher zum Kühlen von Gasen.**

(30) Priorität : 30.03.84 DE 3411795

(43) Veröffentlichungstag der Anmeldung :
06.11.85 Patentblatt 85/45

(45) Bekanntmachung des Hinweises auf die Patenterteilung : 21.10.87 Patentblatt 87/43

(84) Benannte Vertragsstaaten :
DE FR GB IT NL

(56) Entgegenhaltungen :
EP-A- 0 065 332
DE-A- 1 927 949
DE-A- 3 136 860
FR-A-   842 710
US-A- 1 677 795
US-A- 1 782 435
US-A- 3 097 630

(73) Patentinhaber : Borsig GmbH
Berlinerstrasse 27-37
D-1000 Berlin 27 (DE)

(72) Erfinder : Kehrer, Wolfgang
Peter Strasser Weg 18
D-1000 Berlin 27 (DE)

(74) Vertreter : Müller, Jürgen, Dipl.-Ing.
Deutsche Babcock AG Lizenz- und Patentabteilung
Duisburger Strasse 375
D-4200 Oberhausen 1 (DE)

## Beschreibung

Die Erfindung bezieht sich auf einen Wärmetauscher zum Kühlen von Gasen mit während des Kühlvorganges zu Anbackungen neigenden Bestandteilen nach dem Oberbegriff des Anspruches 1.

Die zu kühlenden Gase der oben erwähnten Art sondern ihre Bestandteile, die sich während des Kühlvorgangs verflüssigen oder verfestigen, an den Kühlflächen ab. Dabei sind diese Abscheidungen umso stärker, je niedriger die Temperatur der Kühlfläche im Verhältnis zur Temperatur des Gases ist. Erfolgt die Kühlung des Gases in Rohren, die von einem Kühlmittel umströmt werden, das um die Rohre herum verdampft, dann liegt die gasseitige Oberflächentemperatur der Rohre nahe der Verdampfungstemperatur des kühlenden Mediums, d. h. sie ist relativ niedrig. Die entstehenden Ablagerungen der ausgeschiedenen Bestandteile des Gases werden dabei schon nach kurzer Betriebszeit sehr stark, verschlechtern den Wärmedurchgang erheblich und bewirken einen Anstieg des Druckverlustes des Gases.

Bei einem aus der DE-C-2 913 748 bekannten Wärmetauscher werden die genannten Nachteile dadurch vermieden, daß in die von den Gasdurchgangsrohren und den Kühlmittelrohren gebildeten Ringräume ein kälteres, beimischungsfreies sogenanntes Temperiergas eingeleitet und durch Wirbelbildung mit dem zu kühlenden Gas vermischt wird. Dieser Wärmetauscher erfordert die Bereitstellung eines besonders gekühlten, beimischungsfreien Temperiergases. Außerdem ergibt sich, daß die richtige Mischung von Gas und Temperiergas betriebsmäßig schwierig zu erreichen und zu steuern ist und einen erhöhten technischen Bauaufwand erfordert und daß sich die Menge des Gases um die Menge des Temperiergases erhöht.

In der DE-A-3 136 860 ist ein Wärmetauscher zur Abkühlung von heißen Gasen mit sich während des Kühlvorganges niederschlagenden Bestandteilen beschrieben, der Doppelrohre und zwischen zwei Rohrböden gebildete Kühlmittelsammelkammern aufweist. Durch die Ringräume der Doppelrohre wird Wasser geführt, so daß sich aufgrund der herrschenden Oberflächentemperaturen an der Innenwand der das Gas führenden Rohre Niederschläge, zum Beispiel aus Koks, bilden. Diese Niederschläge werden von Zeit zu Zeit mechanisch oder durch Verbrennen entfernt. Die Doppelrohre sind innerhalb eines offenen, kein Kühlmittel enthaltenden Mantels angeordnet.

Ein gattungsgemäßer Wärmetauscher ist aus der DE-A-1 927 949 bekannt, der insbesondere zur Abkühlung von geschmolzenem Metall oder gemahlenem Metallsalz verwendet wird. Bei diesem Wärmetauscher wird der als Zwischenwärmeträgermedium dienende Dampf im Gegenstrom zu dem zu kühlenden Medium geführt. Bei einer solchen Gegenstromführung, bei der die Temperatur des zu kühlenden Mediums abnimmt und die Temperatur des Dampfes zunimmt, kann die Temperatur der Rohrwand bei einer bestimmten Rohrlänge unter die Kondensationstemperatur einer Gaskomponente eines zu kühlenden Gasgemisches sinken. An dieser Stelle treten Anbackungen an der Innenwand der Rohre auf.

Der Erfindung liegt die Aufgabe zugrunde, den gattungsgemäßen Wärmetauscher so zu verbessern, daß mit einem erheblich geringeren technischen Aufwand und ohne die Notwendigkeit der Bereitstellung eines besonderen Temperiergases sowie der Überwachung und Regelung von dessen Mischung mit dem zu kühlenden Gas ein Ablagern von kondensierbaren Bestandteilen aus den zu kühlenden Gasen auf der Rohrwand vermieden wird.

Diese Aufgabe wird bei einem gattungsgemäßen Wärmetauscher durch die kennzeichnenden Merkmale des Anspruches 1 gelöst. Eine vorteilhafte Ausgestaltung der Erfindung ist in dem Anspruch 2 angegeben.

Mit den angegebenen Mittel wird eine Gleichstromführung zwischen dem zu kühlenden Gas und dem Dampf als Zwischenwärmeträgermedium erreicht. Dabei lassen sich die Temperaturen von Gas und Dampf so annähern, daß sich verhältnismäßig hohe Oberflächentemperaturen an den Rohrwänden einstellen, durch die das Entstehen der Ablagerungen auf den Rohrwänden vermieden oder vergleichsweise erheblich verringert wird.

Ein Ausführungsbeispiel der Erfindung ist in der Zeichnung dargestellt und wird im folgenden näher erläutert. Es zeigen :

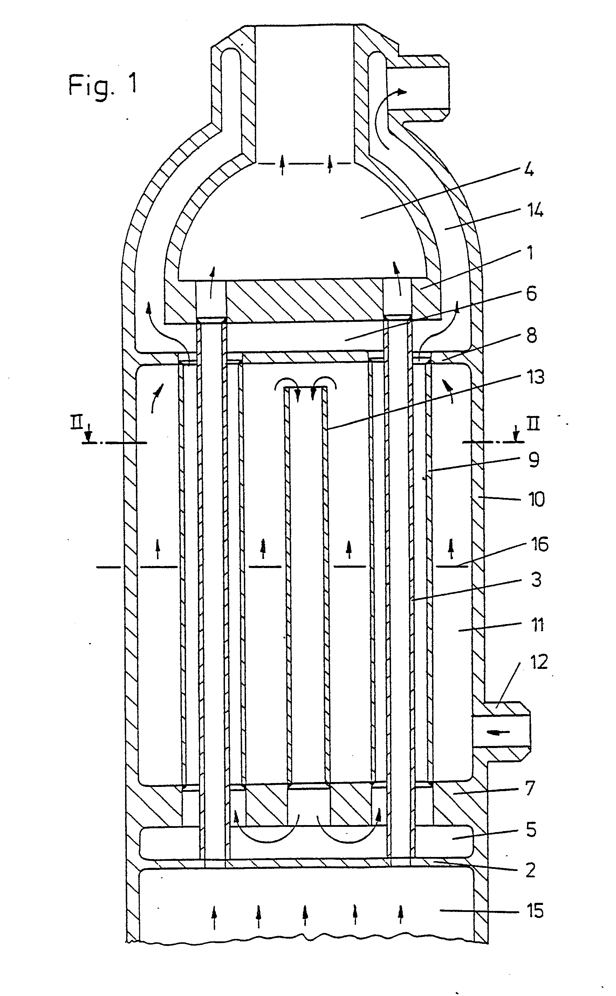

Figur 1 den Längsschnitt durch einen Rohrbündelwärmetauscher gemäß der Erfindung und

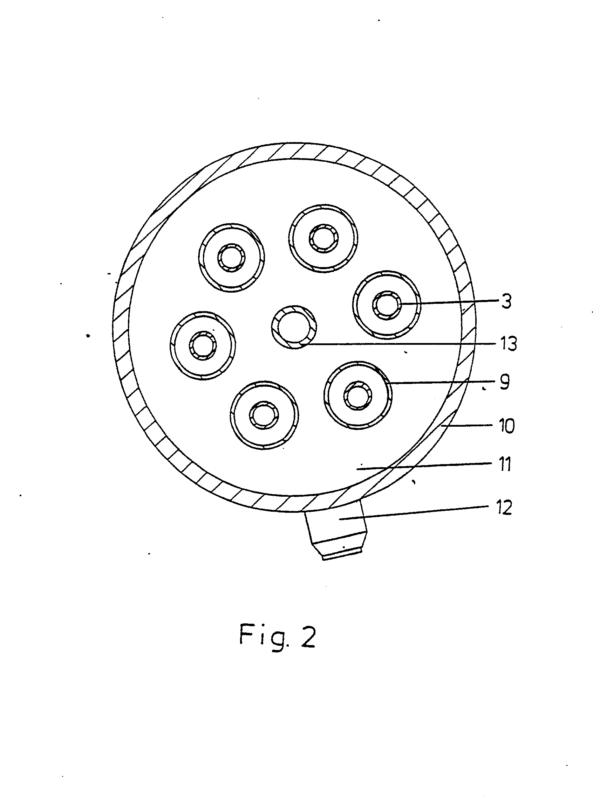

Figur 2 den Schnitt II-II nach Fig. 1.

Der Rohrbündelwärmeaustauscher mit Vertikalanordnung der Rohre weist einen oberen Rohrboden 1 und einen unteren Rohrboden 2 auf, in die Gasdurchgangsrohre 3 münden. Bei dem dargestellten Ausführungsbeispiel strömt das zu kühlende Gas aus einer Gaseintrittskammer 15 in Richtung der gezeichneten Pfeile durch die Gasdurchtrittsrohre 3 in eine Gasaustrittskammer 4. Oberhalb der Gaseintrittskammer 15 und unterhalb der Gasaustrittskammer 4 wird jeweils eine Verbindungskammer 5 bzw. 6 gebildet, die einerseits von dem jeweiligen Rohrboden 2 bzw. 1 und von einem, im Abstand von diesen angeordneten weiteren Rohrboden 7 bzw. 8 begrenzt wird. In diesen beiden Rohrböden 7 und 8 münden Kühlmittelrohre 9, die die Gasdurchgangsrohre 3 mit Abstand umschließen. Die Kühlmittelrohre 9 befinden sich in einem Mantelraum 11, der von einem Mantel 10 umgrenzt ist. Der Mantel 10 steht auf dem Rohrboden 7 auf, ist gegen diesen abgedichtet und endet am Rohrboden 8. Der Mantel 10 weist einen Einführstutzen 12 für ein flüssiges Kühlmittel und einen Auslaß 14 auf.

In den Mantelraum 11 ragt ein Durchtrittsrohr 13 hinein, das den Mantelraum 11 mit der unteren Verbindungskammer 5 verbindet. Zu diesem Zweck ist das eine Ende des Durchtrittsrohres 13 in den unteren Rohrboden 7 eingesetzt. Die Öffnung an dem anderen Ende des Durchtrittsrohres 13 befindet sich unterhalb des die obere Verbindungskammer 6 begrenzenden Rohrbodens 8. Innerhalb des Mantelraumes 11 ist ein Flüssigkeitsstand 16 eingehalten, der unterhalb der oberen Öffnung des Durchtrittsrohres 13 liegt.

In dem vom Mantel 10 umschlossenen Mantelraum 11 wird das eingeführte flüssige Kühlmedium erhitzt und der erzeugte Sattdampf strömt in Richtung der eingezeichneten Pfeile nach oben. Anschließend wird der Sattdampf in dem Durchtrittsrohr 13 nach unten in die Verbindungskammer 5 geführt und strömt aus dieser nach oben in die Verbindungskammer 6 und von dieser in den Auslaß 14, der hier in Form eines Ringmantelraumes die Gasaustrittskammer 4 umschließt. Da der Dampf beim Strömen durch die Ringquerschnitte innerhalb der Kühlmittelrohre 9 Wärme vom heißen, zu kühlenden Gas aufnimmt, gerät er in einen überhitzten Zustand. Je nach der Ausführung und Bemessung der die Wärme austauschenden Flächen sowie der Höhe des Flüssigkeitsstandes 16 in dem Mantelraum 11 kann die Austrittstemperatur des Dampfes festgelegt werden. Es besteht dabei die Möglichkeit, die Höhe der Flüssigkeit im Mantelraum 11 durch eine (nicht dargestellte) Regeleinrichtung zu überwachen bzw. im Sinne der obenstehenden Steuermöglichkeit zu regeln.

**Patentansprüche**

1. Wärmetauscher zum Kühlen von Gasen mit während des Kühlvorganges zu Anbackungen neigenden Bestandteilen, bestehend aus einem Mantel (10) mit einer Gaseintrittskammer (15) und einer Gasaustrittskammer (4), die jeweils durch einen Rohrboden (2, 1) begrenzt und durch in diese Rohrböden (2, 1) eingesetzte, vertikal angeordnete Gasdurchgangsrohre (3) verbunden sind, wobei jedes Gasdurchgangsrohr (3) unter Einhaltung eines Zwischenraumes von einem Kühlmittelrohr (9) umgeben ist, die Kühlmittelrohre (9) in Rohrböden (7, 8) gehalten sind, die unter Bildung einer Verbindungskammer (5, 6) in einem Abstand von den den Gasdurchgangsrohren (3) zugeordneten Rohrböden (2, 1) gehalten sind und die obere Verbindungskammer (6) mit einem Auslaß (14) versehen ist und der Mantel (10) und die den Kühlmittelrohren (3) zugeordneten Rohrböden (7, 8) einen Mantelraum (11) begrenzen, in den ein Einführungsstutzen (12) für die Zufuhr eines verdampfenden Kühlmittels mündet, dadurch gekennzeichnet, daß innerhalb des Mantelraumes (11) ein oder mehrere Durchtrittsrohre (13) vorgesehen sind, deren Eintrittsöffnungen sich oberhalb des in dem Mantelraum (11) eingehaltenen Flüssigkeitsstandes (16) befinden und deren Austrittsöffnungen in die untere Verbindungskammer (5) münden.

2. Wärmetauscher nach Anspruch 1, dadurch gekennzeichnet, daß der Auslaß (14) der Verbindungskammer (6) durch einen die Gasaustrittskammer (4) umschließenden Kühlmantel geführt ist.

**Claims**

1. Heat exchanger for cooling of gases with substances which tend to caking during the cooling process, consisting of a shell (10) with a gas inlet chamber (15) and a gas outlet chamber (4) each of which is limited by a tube bottom (2, 1) and connected by vertical gas passage tubes (3) fitted into these tube bottoms (2, 1) where each gas passage tube (3) is surrounded at an appropriate distance by a refrigerant tube (9), the refrigerant tubes (9) are held in tube bottoms (7, 8) which, forming a connection chamber (5, 6), are held at a due distance by the tube bottoms (2, 1) assigned to the gas passage tubes (3), and the upper connection chamber (6) is provided with an outlet (14) and the shell (10) and the tube bottoms (7, 8) assigned to the refrigerant tubes (3) delimit a shell space (11) at which an inlet nozzle (12) for the supply of an evaporating refrigerant ends being characterized by one or more penetration tubes (13) provided inside the shell space (11) whose inlet openings are located above the liquid level (16) maintained in the shell space (11) and whose outlet openings discharge into the lower connection chamber (5).

2. Heat exchanger according to claim 1 being characterized by the outlet (14) of the connection chamber (6) which is passed through a cooling jacket surrounding the gas outlet chamber (4).

**Revendications**

1. Echangeur thermique pour le refroidissement de gaz contenant des composants ayant tendance, durant le processus de refroidissement, à former des dépôts visqueux, comportant une enveloppe (10) avec une chambre d'admission du gaz (15) et une chambre de sortie du gaz (4), chambres limitées chacune par un plateau multitubulaire (2, 1) et raccordées entre elles par des tubes traversants (3) pour le passage du gaz montés verticalement dans ces plateaux multitubulaires (2, 1), chaque tube traversant (3) étant entouré d'un tube de fluide de refroidissement (9) dont il est séparé par un espace intermédiaire, les tubes de fluide de refroidissement (9) étant maintenus dans des plateaux (7, 8) disposés à une certaine distance des deux plateaux (2, 1) où sont montés les tubes traversants (3), et formant avec eux des chambres de raccordement (5, 6) la chambre de raccordement supérieure (6) étant dotée d'une sortie (14) et l'enveloppe (10) et les plateaux (7, 8) associés aux tubes de fluide de refroidissement (3) limitant un espace (11) contigu à l'enveloppe, espace dans lequel débouche une tubulure d'introduction (12) pour l'arrivée d'un fluide de refroidissement en ébullition, caractérisé en ce qu'un ou plusieurs tubes de transfert (13) dont les ouvertures d'entrée se trouvent au-dessus du niveau (16) du liquide contenu dans l'espace (11) et dont les ouvertures de sortie débouchent dans la chambre de raccordement inférieure (5) sont prévus à l'intérieur de l'espace (11) contigu à l'enveloppe.

2. Echangeur thermique selon la revendication 1, caractérisé en ce que la sortie (14) de la chambre de raccordement (6) est aménagée à travers une enveloppe de refroidissement entourant la chambre de sortie du gaz (4).

Fig. 1

Fig. 2